# DEMANDE DE BREVET EUROPEEN

(11) **EP 3 093 048 A1**
(43) Date de publication de la demande: **16.11.2016**
(21) Numéro de dépôt: 16169441.9
(22) Date de dépôt: 12.05.2016
(51) Int. Cl.: A62B 35/04, F16F 7/00, D03D 1/00

(54) **SANGLE À DÉCHIREMENT ET PROCÉDÉ DE FABRICATION CORRESPONDANT**

(30) Priorité: 12.05.2015 FR 1554253
(71) Demandeur: Zedel, 38920 Crolles (FR)
(72) Inventeur: BOUQUIER, Benoît, 38700 Corenc (FR)
(74) Mandataire: Talbot, Alexandre

(57) **Abrégé**

La sangle à déchirement (1) est munie de première et deuxième sangles tissées (2, 3). Chacune des première et seconde sangles tissées (2, 3) comporte au moins une zone de séparation (X) où la première sangle (2) est séparée mécaniquement de la deuxième sangle (3), une au moins zone de liage (Y) où la première sangle (2) et la seconde sangle (3) sont mécaniquement liées par un fil de liage (4) tissé dans les première et deuxième sangles (2, 3) et configurée pour dissiper l'énergie par rupture en cas d'utilisation dynamique de la sangle à déchirement (1), et au moins une zone de résistance (Z) où les première et seconde sangles (2, 3) sont mécaniquement liées de manière permanente. La zone de résistance (Z) comporte en outre au moins un croisement où la première sangle (2) traverse la deuxième sangle (3). L'invention concerne également un dispositif d'attache de sécurité muni d'une telle sangle à déchirement (1), ainsi que le procédé de fabrication d'une telle sangle à déchirement (1).

## Description

### Domaine technique de l'invention

L'invention est relative à une sangle dite « à déchirement » destinée à être intégrée dans un absorbeur d'énergie, lui-même destiné à être intégré dans un dispositif d'attache de sécurité pour le déplacement d'un utilisateur le long d'une main courante.

### État de la technique

Dans le domaine de l'escalade et des travaux en hauteur, les absorbeurs d'énergie sont régulièrement utilisés afin d'assurer la sécurité et le confort de l'utilisateur en cas de chute. Un type d'absorbeur connu est formé par une sangle à déchirement 1.

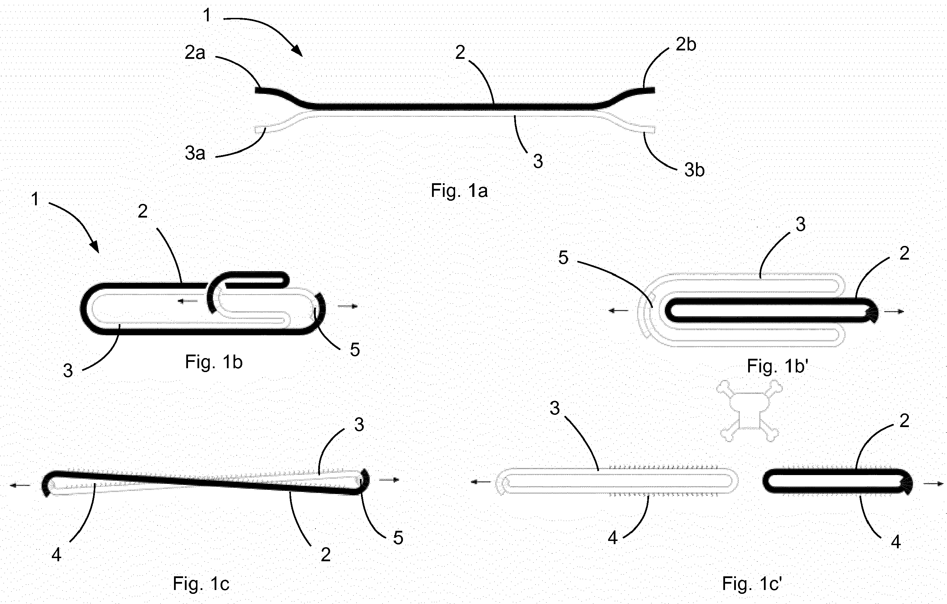

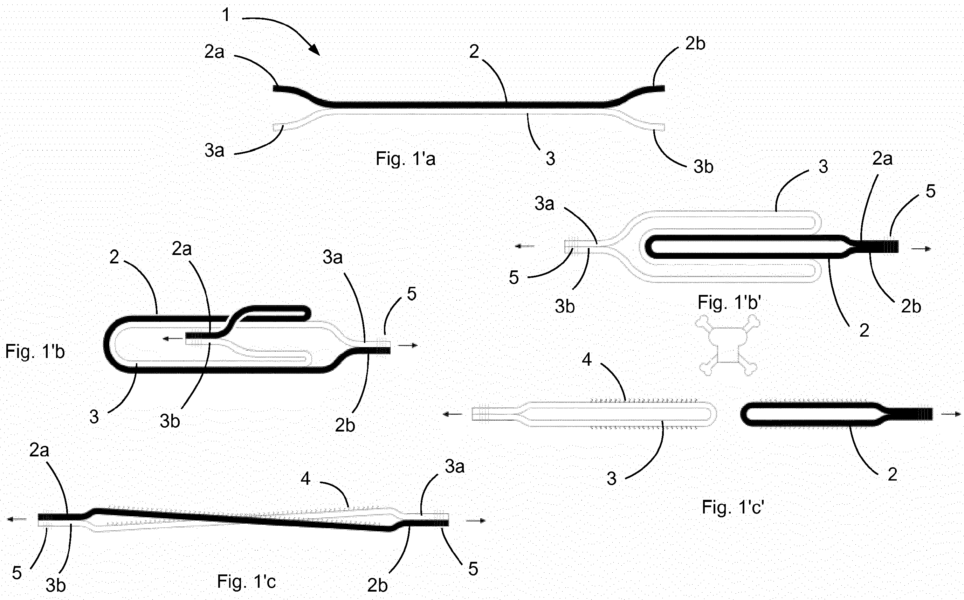

De manière conventionnelle illustrée aux figures 1a, 1b, 1c, 1b' et 1c', deux sangles 2 et 3 sont associées pour former une sangle à déchirement 1. Les deux sangles 2 et 3 sont liées sur une ou plusieurs portions au moyen d'un fil de liage qui va se rompre et libérer mécaniquement les deux sangles. Les deux sangles sont agencées de manière à ce qu'après sollicitation, elles forment un anneau de sangle.

L'utilisation d'un anneau de sangle permet de s'assurer qu'après sollicitation, les éléments connectés à la sangle à déchirement resteront solidaires. Pour obtenir cet anneau de sangle, les deux extrémités des sangles 2 et 3 sont connectées ensemble par couture pour former les zones de résistance qui garantissent la tenue de l'anneau de sangle.

Les figures 1'a, 1'b, 1'c, 1'b' et 1'c' représentent des variantes de réalisation des dispositifs illustrés aux figures 1a, 1b, 1c, 1b' et 1c'. Entre ces deux variantes de réalisation, seules les zones de résistance sont modifiées. Dans le premier mode de réalisation, les zones de résistance sont avantageuses pour la connexion directe d'un mousqueton (figures 1b et 1b') alors que la variante de réalisation (figures 1b et 1'b') est avantageuse pour la couture d'un élément textile qui appliquera les efforts en cas de chute.

Différents modes de réalisation sont connus et utilisés. Un exemple de réalisation est décrit dans la demande internationale WO 98/41284. Ce mode de réalisation particulier est illustré à la figure 2. Deux sangles sont connectées mécaniquement à leurs extrémités par des zones de résistance qui définissent l'anneau de sangle. A l'intérieur de cet anneau de sangle, deux zones de liage sont formées pour connecter mécaniquement les deux sangles avec un fil de liage. Une zone de séparation est disposée entre ces deux zones de liage, où les deux sangles sont libres. Ces deux portions de sangle sont utilisées pour connecter l'utilisateur d'un côté et le point d'assurage de l'autre. En cas de chute, les deux zones de liage sont sollicitées jusqu'à atteindre les zones de résistance.

Une variante de réalisation consiste à utiliser une seule zone de liage. Dans un autre mode de réalisation représenté aux figures 1b et 1c, une sangle à déchirement 1 est formée par deux sangles 2 et 3 qui sont tout d'abord liées à l'aide de fils de liage 4. Ensuite les deux sangles 2 et 3 sont vrillées de sorte que l'extrémité 2a de la sangle 2 et l'extrémité 3b de la sangle 3 d'une part, et l'extrémité 3a de la sangle 3 et l'extrémité 2b de la sangle 2 d'autre part soient cousues à l'aide de fils de résistance 5. La sangle à déchirement 1 est alors agencée sous la forme représentée à la figure 1 b.

En cas d'utilisation dynamique, les forces (représentées par les flèches sur les figures 1b et 1c) exercées sur la sangle à déchirement ont pour effet de rompre les fils de liage 4 liant les sangles 2 et 3. La rupture des fils de liage 4 permet d'amortir le choc subi par l'utilisateur lors de sa chute. Au final les deux sangles 2 et 3 sont complètement désolidarisées sauf au niveau des coutures réalisées au moyen des fils de résistance 5. Les fils de liage 4 cassés sont représentés sur les figures 1b et 1c par les fils en saillis des sangles 2 et 3.

Comme illustré sur les figures 1b et 1c en comparaison des figures 1b' et 1c', vriller les deux sangles 2 et 3 est indispensable, sans quoi il est impossible de coudre les extrémités 2a et 3b d'une part, et les extrémités 3a et 2b d'autre part et former au final un anneau de sangle. Si les extrémités 2a et 2b d'une part et les extrémités 3a et 3b d'autre part sont cousues ensemble comme sur la figure 1 b', les sangles 2 et 3 se désolidarisent complètement et provoquent la chute de l'utilisateur en cas d'utilisation dynamique (figure 1c'). Ce qui est expliqué pour les modes de réalisation illustrés aux figures 1b, 1c, 1b' et 1c' est également vrai pour les modes de réalisation illustrés aux figures 1'b, 1'c, 1'b' et 1'c'.

Il apparaît que les sangles à déchirement connues sont compliquées à réaliser et donc coûteuses car il est nécessaire de s'assurer qu'après sollicitation, l'anneau de sangle sera formé et qu'il sera résistant pour supporter la chute de l'utilisateur.

La solidité de la couture des fils de résistance est donc fondamentale, elle garantit la sécurité de l'utilisateur en cas d'utilisation dynamique de la sangle. Pour répondre aux normes de sécurité, la couture est bien souvent réalisée sur une longueur importante de la sangle pour éviter toute déchirure. Cela a pour inconvénient de limiter fortement la souplesse de la sangle et d'augmenter son encombrement.

Un autre inconvénient est que le fait de réaliser une vrille des sangles 2 et 3 augmente l'encombrement de la sangle à déchirement 1 car il faut une longueur de sangle suffisante pour faire passer la tête de la machine à coudre lors de la réalisation de la sangle.

### Objet de l'invention

Un objet de l'invention consiste à réaliser une sangle à déchirement qui soit plus solide et/ou plus compacte. A cet effet, la sangle est munie de première et deuxième sangles tissées. Chacune des première et deuxième sangles tissées comporte :
- au moins une zone de séparation où la première sangle est séparée mécaniquement de la deuxième sangle,
- au moins une zone de liage où la première sangle et la seconde sangle sont mécaniquement liées par un fil de liage tissé dans les première et deuxième sangles et configurée pour dissiper l'énergie par rupture en cas d'utilisation dynamique de la sangle à déchirement,
- au moins une zone de résistance où les première et seconde sangles sont mécaniquement liées de manière permanente.

La sangle à déchirement est remarquable en ce que la au moins une zone de résistance comporte au moins un croisement où la première sangle traverse la deuxième sangle.

Selon un mode de réalisation avantageux, la sangle peut comporter une zone de résistance, et cette zone de résistance est séparée de la au moins une zone de séparation par la au moins une zone de liage.

Selon une alternative de réalisation, la sangle peut comporter deux zones de résistance disposées à chacune des extrémités, les deux zones de résistances étant séparées par la au moins une zone de séparation et par la au moins une zone de liage. Dans ce cas, la sangle peut comporter une zone de liage et une zone de liage additionnelle séparées par la zone de séparation.

De manière préférée, la au moins une zone de résistance peut comporter au moins deux croisements où la première sangle traverse la deuxième sangle.

Par ailleurs chaque zone de résistance peut comporter au moins un croisement où la première sangle traverse la deuxième sangle.

Lorsque la sangle comporte deux zones de résistance, la sangle peut comporter une zone de croisement où la première sangle traverse la deuxième sangle, la zone de croisement séparant les deux zones de résistance, et dans laquelle chaque zone de résistance peut être séparée de la zone de croisement par au moins une zone de liage le long de chacune des première et deuxième sangles, des première et secondes zones de liage pouvant être séparées par la au moins une zone de croisement.

Un autre objet de l'invention est une sangle formée par tissage de première et deuxième sangles superposées et comportant :
- au moins un croisement, et préférentiellement au moins deux croisements où la première sangle traverse la deuxième sangle,
- au moins une zone de liage où la première sangle et la seconde sangle sont mécaniquement liées par un fil de liage tissé dans les première et deuxième sangles,
- au moins zone de séparation, où la première sangle est séparée mécaniquement de la deuxième sangle.

La sangle peut en particulier comporter un motif de répétition formé de manière répétitive, le motif de répétition comportant successivement:
- une première zone de résistance comportant au moins un croisement et préférentiellement au moins deux croisements où la première sangle traverse la deuxième sangle,
- une première zone de liage où la première sangle et la seconde sangle sont mécaniquement liées par un fil de liage tissé dans les première et deuxième sangles,
- une zone de séparation, où la première sangle est séparée mécaniquement de la deuxième sangle.

Le motif de répétition peut comporter après la zone de séparation :
- une zone de liage additionnelle où la première sangle et la seconde sangle sont mécaniquement liées par un fil de liage tissé dans les première et deuxième sangles.

Dans ce cas, la sangle peut comporter successivement après la zone de liage additionnelle :
- une deuxième zone de résistance comportant au moins un croisement et préférentiellement au moins deux croisements où la première sangle traverse la deuxième sangle,
- une deuxième zone de séparation et/ou une zone de liage additionnelle.

Un autre objet de l'invention est relatif à un procédé de fabrication d'une sangle à déchirement dotée des caractéristiques précitées. Le procédé de fabrication comprend les étapes suivantes :
- fournir une sangle,
- couper la sangle au moins dans la zone de séparation.

Lorsque la sangle comporte une zone de résistance dotée de deux croisements, le procédé de fabrication de la sangle peut comporter une étape de coupe de la sangle entre deux croisements de la zone de résistance.

Le procédé peut également comporter une étape de coupe de la sangle dans une deuxième zone de séparation et/ou dans la deuxième zone de liage additionnelle.

Selon le mode de réalisation de la sangle, le procédé peut également comporter une étape de coupe de la sangle entre deux croisements de la zone de résistance, ou une étape de coupe de la sangle dans deuxième zone de séparation et/ou dans la deuxième zone de liage additionnelle.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1a, 1b, 1c 1b' et 1c', illustrent de façon schématique deux modes de réalisation d'une sangle à déchirement selon l'art antérieur,
- les figures 1'a, 1'b, 1'c 1'b' et 1'c', illustrent de façon schématique des variantes de modes de réalisation d'une sangle à déchirement selon l'art antérieur,

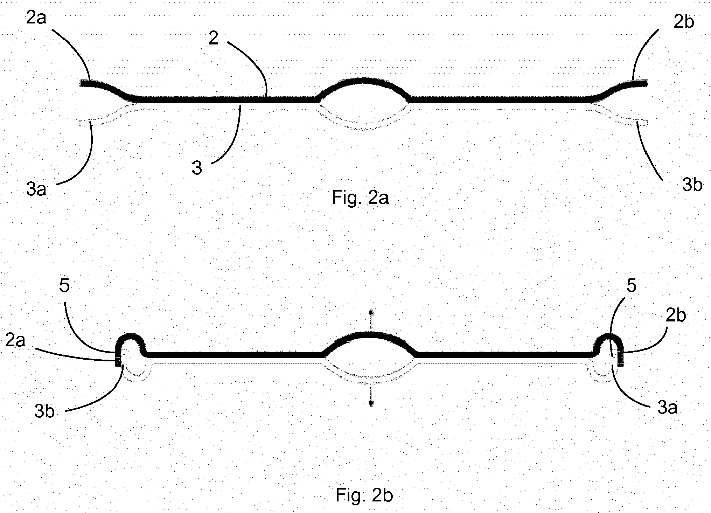

- la figure 2 illustre de façon schématique un autre mode de réalisation d'une sangle à déchirement selon l'art antérieur,
- les figures 3a, 3b, 3c et 3d représentent un mode de réalisation possible de la sangle à déchirement,
- les figures 4 et 5 présentent une vue en coupe longitudinale d'un détail de la sangle à déchirement selon l'invention pour une sangle avec une seule nappe ou pour une sangle avec deux nappes,
- la figure 6 illustre un autre mode de réalisation d'une sangle à déchirement selon l'invention,
- la figure 7 illustre une succession de différentes zones réalisables sur une même sangle,
- la figure 8 représente une alternative de réalisation de la sangle à déchirement illustrée à la figure 6, mais présentant une zone de liage,
- les figures 9 à 14 illustrent en vue de dessus et de manière schématique différents modes de réalisation d'une sangle configurée pour former plusieurs sangles à déchirement.

### Description détaillée

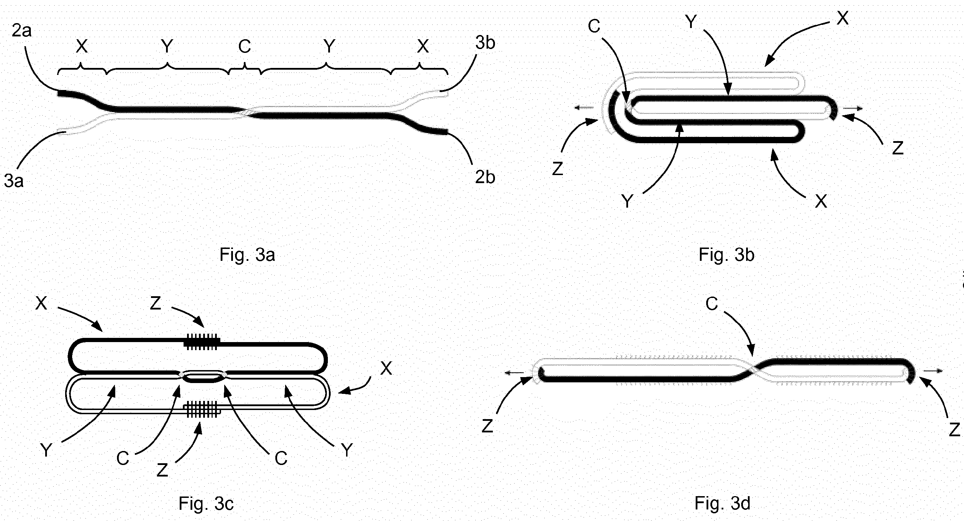

Comme illustré aux figures 3a, 3b 3c et 3d, la sangle à déchirement 1 comporte plusieurs zones différentes avec des caractéristiques mécaniques différentes. La sangle à déchirement comporte une zone de séparation X où les première et seconde sangles 2 et 3 sont séparées. Dans cette zone de séparation X, les première et seconde sangles 2 et 3 ne sont pas liées mécaniquement. Dans certains modes de réalisation, il peut exister plusieurs zones de séparation X. La zone de séparation X peut être la zone où la sangle à déchirement 1 est connectée à l'élément à protéger (généralement l'utilisateur) et par exemple à un point fixe, une ligne de vie ou de manière générale un point d'assurage.

La sangle à déchirement 1 comporte au moins une zone de liage Y où les première et deuxième sangles 2 et 3 sont liées mécaniquement au moyen d'un fil de liage 4 qui est préférentiellement installé par tissage lors de l'étape de tissage des deux sangles 2 et 3. Dans la zone de liage Y, les deux sangles 2 et 3 sont liées mécaniquement par le fil de liage 4 également appelé fil de liage qui va être mis sous tension puis se rompre si la contrainte appliquée pour séparer les deux sangles 2 et 3 atteint une valeur seuil. C'est la rupture des différents fils de liage 4 qui dissipe au moins une partie de l'énergie de la chute de l'élément à protéger. Dans la sangle à déchirement 1, le rôle des fils de liage 4 est de dissiper, par rupture, l'énergie emmagasinée par la sangle en cas d'utilisation dynamique. Au fur et à mesure de la rupture des fils de liage 4, les deux sangles 2 et 3 initialement liées se désolidarisent.

La sangle à déchirement 1 comporte encore au moins une zone de croisement C où la première sangle 2 traverse la deuxième sangle 3. Les première et deuxième sangles 2 et 3 se croisent de sorte que l'ordre de superposition des deux sangles est différent de chaque côté de la zone de croisement C. Chaque zone de croisement correspond à une zone de connexion permanente entre les deux sangles 2 et 3.

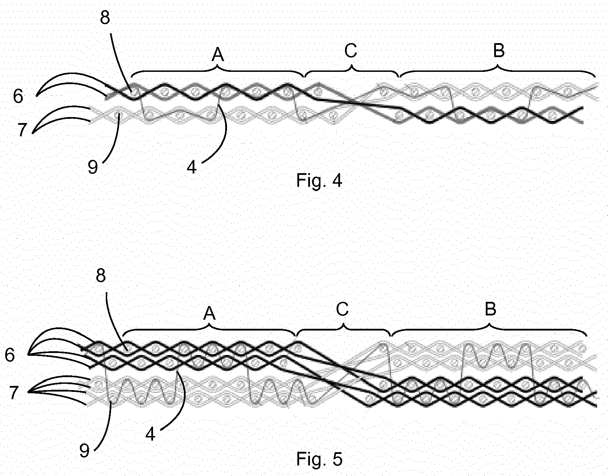

Comme illustré aux figures 4 et 5 à titre d'exemple, la sangle à déchirement comprend des premiers fils de chaîne 6 et des deuxièmes fils de chaîne 7, et des premiers fils de trame 8 et des deuxièmes fils de trame 9 pour former les sangles 2 et 3. Dans le mode de réalisation illustré à la figure 4, la sangle 2 et la sangle 3 sont chacune formées par une simple nappe. Dans le mode de réalisation de la figure 5, les sangles 2 et 3 sont chacune formées par deux nappes, par exemple par une sangle tubulaire.

Les figures 4 et 5 illustrent chacune la succession de trois zones A, C et B.

Dans une première zone A, la première sangle 2 est formée par les premiers fils de chaîne 6 et les premiers fils de trame 8, et dans une deuxième zone B, la première sangle 2 est formée par les premiers fils de chaîne 6 et les deuxièmes fils de trame 9.

A l'inverse, dans la première zone A, la deuxième sangle 3 est formée par les deuxièmes fils de chaîne 7 et les deuxièmes fils de trame 9, et dans une deuxième zone B, la deuxième sangle 3 est formée par les deuxièmes fils de chaîne 7 et les premiers fils de trame 8.

Dans la zone de croisement C située entre les première et deuxième zones A et B, les premiers et deuxièmes fils de chaîne 6 et 7 s'entrecroisent. Dans la première zone A, la première sangle 2 est située au-dessus de la deuxième sangle 3, tandis que dans la deuxième zone B elle est située au-dessous de la deuxième sangle 3. Dans l'exemple illustré, les deux sangles sont liées mécaniquement dans les zones A et B qui représentent chacune des zones de liage Y au moyen du fil de liage 4.

Le mode de réalisation illustré aux figures 4 et 5 représente par exemple ce qui est utilisé pour former la sangle à déchirement de la figure 3. En variante, il est possible de ne réaliser une zone de liage que dans la zone A ou dans la zone B ou dans aucune des zones A et B. Pour ne pas former de zone de liage 4, il est possible de lier le fil de liage 4 avec une seule des sangles 2 ou 3, de laisser le fil de liage 4 entre les deux sangles 2 et 3. Si les sangles 2 et 3 sont des sangles doubles telles qu'illustrées à la figure 5, il est possible de cloisonner le fil de liage 4 entre les deux nappes de la sangle 2 ou de la sangle 3.

La sangle à déchirement 1 comporte également une zone de résistance Z où les deux sangles 2 et 3 sont liées mécaniquement. La zone de résistance Z est configurée pour garantir la connexion mécanique entre les deux sangles 2 et 3 après sollicitation et rupture du fil de liage 4. Selon les modes de réalisation, la zone de résistance Z peut être la zone où les efforts sont appliqués lors d'une chute, c'est par exemple la zone d'accroche des connecteurs tel que des mousquetons.

Comme dans l'art antérieur, la sangle à déchirement 1 est configurée de sorte qu'après rupture du fil de liage 4, les deux sangles 2 et 3 restent liées au moyen des zones de résistance Z pour former un anneau de sangle qui retient les connecteurs reliés mécaniquement à l'élément à protéger et à un point fixe ou mobile. Comme illustré à la figure 3c, après rupture, les fils de liage 4 cassés sont représentés par les fils en saillie depuis les sangles 2 et 3.

Dans le mode de réalisation illustré aux figures 3a, 3b et 3c, deux zones de résistance Z sont formées ainsi qu'une zone de croisement C entre ces deux zones de résistance Z. Il y a donc une zone de connexion permanente entre les deux zones de résistance Z.

Dans la configuration illustrée, chacune des deux zones de résistance Z est séparée de la zone de croisement C par au moins une zone de liage Y. Il y a alors la zone de liage Y complétée par une zone de liage additionnelle Y. Selon les modes de réalisation, une zone de liage Y ou plusieurs zones de liage Y séparées par une zone de séparation X peuvent être utilisées entre la zone de résistance et la zone de croisement C.

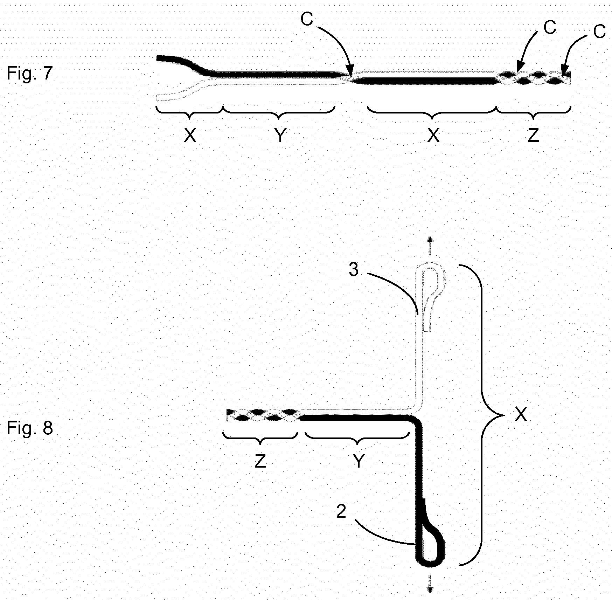

Cependant, en variante illustrée à la figure 7, une seule zone de liage peut être utilisée mais ce mode de réalisation est moins avantageux car le connecteur à tendance à se déplacer le long de la sangle et fur et à mesure de la traction.

Dans le mode de réalisation de la figure 3, il est particulièrement avantageux d'utiliser les zones de résistance Z comme zone d'accrochage des connecteurs reliés à l'utilisateur et au point d'assurage.

Comme indiqué plus haut, lors d'une chute, une force de traction (représentée par les flèches sur les figures 3b et 3c) apparaît entre les deux sangles 2 et 3 et lorsque l'effort dépasse une valeur seuil, les fils de liage 4 se déforment jusqu'à leur seuil de rupture. Une fois le seuil de rupture atteint, ils cassent et mettent en tension les fils de liage 4 suivants. Au fur et à mesure de la chute, les sangles 2 et 3 se séparent dans les zones de liage Y par rupture des fils de liage 4. En se cassant, les fils de liage 4 dissipent l'énergie accumulée et ralentissent la chute de l'utilisateur. Lorsque tous les fils de liage 4 ont cédé (figure 3c), les fils de chaîne et de trame des sangles 2 et 3 et les zones de résistance Z forment les anneaux de sangle retenant l'utilisateur.

On observe dans le mode de réalisation illustré à la figure 3c, qu'après sollicitation de la sangle à déchirement 1 au delà du seuil de rupture des fils de liage 4, deux anneaux de sangle distincts sont formés. Ces deux anneaux de sangle sont connectés mécaniquement au moyen de la zone de croisement C et des zones de résistance Z. La zone de croisement C sépare les deux anneaux de sangle.

Dans le mode de réalisation illustré à la figure 3b, les zones de résistance Z sont formées par la couture d'un fil de résistance qui vient connecter les deux extrémités des sangles et définir les futurs anneaux de sangle.

Ce mode de réalisation est particulièrement intéressant car la zone de croisement C est réalisée lors du tissage des sangles, ce qui assure une grande répétabilité. Ensuite, le croisement est réalisé automatiquement par le métier à tisser à la place d'un opérateur qui peut oublier de réaliser la vrille de l'art antérieur à la suite d'une sollicitation inattendue. Le risque de réaliser une sangle à déchirement 1 non conforme est donc fortement diminué.

Dans cette configuration, il est intéressant de réaliser des zones de résistance Z qui sont formées chacune par une extrémité de la première sangle 2 et par une extrémité de la deuxième sangle 3.

Les première et seconde sangles 2 et 3 comportent chacune une première extrémité 2a et 3a disposées d'un premier côté de la zone de croisement C et des deuxième extrémités opposées 2b et 3b disposées d'un deuxième côté de la zone de croisement C. La première extrémité 2a de la première sangle 2 est connectée à la deuxième extrémité 3b de la deuxième sangle 3 pour former une première zone de résistance Z. La première zone de résistance Z est avantageusement réalisée par un fil de résistance (non représenté) qui est cousu. La deuxième extrémité 2b de la première sangle 2 est connectée à la première extrémité 3a de la deuxième sangle 3 pour former une deuxième zone de résistance Z. La deuxième zone de résistance Z est avantageusement réalisée par un fil de résistance qui est cousu. Les fils de résistance sont présents pour connecter les extrémités des sangles 2 et 3, et sont configurés pour ne pas se rompre en cas de chute de l'utilisateur.

Cette configuration est avantageuse car elle est facile à réaliser. La figure 4 illustre deux sangles 2 et 3 reliées par une zone de croisement C et par deux zones A et B. Les deux sangles sont superposées avec une sangle supérieure et une sangle inférieure. Pour former la sangle à déchirement 1, il est avantageux de connecter les deux sangles supérieures pour former une zone de résistance Z et de connecter les deux sangles inférieures pour former l'autre zone de résistance Z. Cette configuration est simple à réaliser ce qui réduit les risques d'erreur.

Cependant, on constate que si les zones de résistances sont formées par les deux extrémités de la même sangle 2 ou 3, après sollicitation deux anneaux de sangle seront formés. Ces deux anneaux de sangle seront connectés au moyen de la zone de croisement C ce qui permet conserver l'utilisateur solidaire de son point d'assurage. L'utilisation d'une zone de croisement C permet de se prémunir d'une erreur dans la formation des zones de résistance.

Dans la configuration illustrée, chaque zone de liage Y est séparée de la zone de résistance Z par une zone de séparation X. Il est également possible de prévoir qu'une seule des zones de résistance Z est séparée de sa zone de liage Y la plus proche au moyen d'une zone de séparation X. Il est encore possible de prévoir que la zone de résistance Z est en contact avec la zone de liage Y mais cette configuration est plus difficile à réaliser de manière industrielle.

Dans cette configuration, il est possible de ne pas utiliser de vrille sur l'une des deux sangles pour assurer la formation d'un anneau de sangle lors d'une sollicitation de la sangle à déchirement 1 au delà du seuil de rupture des fils de liage 4. Par ailleurs, il apparaît également avantageux de réaliser des sangles plus compactes en réalisant une sangle à déchirement 1 dépourvue de vrille.

Ce mode de réalisation est particulièrement facile à détecter si les deux sangles utilisées présentent des couleurs ou des motifs différents. La zone de croisement se traduit par un changement de couleur ou de motif de la sangle supérieure ou inférieure. Si cette signature n'est pas présente sur la sangle, l'opérateur détecte immédiatement que la sangle n'est pas configurée pour réaliser la sangle à déchirement.

Dans une variante de réalisation illustrée à la figure 3c, la zone de croisement peut être formée par plusieurs zones de croisement successives.

Comme indiqué plus haut, il est possible de réaliser plusieurs croisements des deux sangles 2 et 3, par exemple deux croisements ou deux zones de croisement. De manière avantageuse, les deux zones de croisement sont séparées par une zone de séparation pour conférer de la souplesse à la superposition des sangles. En variante, il est possible de relier les deux sangles 2 et 3 entre les deux zones de croisement C, cette connexion mécanique n'étant pas utilisée dans le fonctionnement de la sangle à déchirement 1.

Dans cette configuration illustrée à la figure 3c, la sangle supérieure des deux sangles superposées est la même à l'extérieur de la zone de croisement C définie par les deux croisement consécutifs, par exemple la sangle 2.

Comme pour le mode de réalisation précédent, deux zones de résistance Z sont formées ainsi qu'au moins une zone de liage Y des sangles 2 et 3.

La première zone de résistance Z est formée par la connexion mécanique des deux extrémités de la première sangle 2. La deuxième zone de résistance Z est formée par la connexion mécanique des deux extrémités de la deuxième sangle 3.

Comme pour le mode de réalisation précédent, il n'est pas nécessaire de réaliser une vrille sur au moins une des sangles pour former un anneau de sangles après sollicitation. Cependant, une vrille peut être réalisée mais la sangle à déchirement sera moins compacte. Il est donc avantageux de réaliser une sangle dépourvue de vrille.

Si les deux sangles utilisées ont des couleurs ou des motifs différents, il est aisé de s'assurer que les croisements ont été réalisés. Le risque d'erreur sur la formation des zones de résistance est également réduit.

Dans ce mode de réalisation, après sollicitation la première sangle 2 forme un premier anneau de sangle et la deuxième sangle 3 forme un deuxième anneau de sangle. Les deux anneaux de sangles sont connectés mécaniquement par les zones de croisement C. Comme pour le mode de réalisation précédent, la connexion des deux sangles différentes pour former les zones de résistance Z ne porte pas préjudice car les anneaux de sangle formés après sollicitation sont solidarisés par les zones de croisement.

Ce qui a été décrit pour une zone de croisement C avec un croisement peut être utilisé pour un nombre impair de croisements C. Ce qui a été décrit pour deux croisements peut être utilisé pour un nombre pair de croisements. Cependant, pour gagner en compacité, il est intéressant de garder un nombre restreint de croisements.

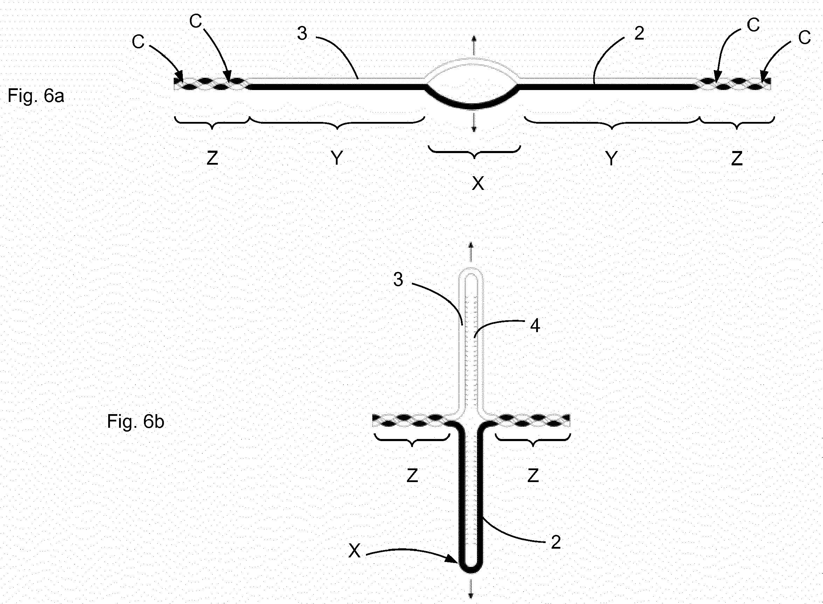

Dans une variante de réalisation illustrée aux figures 6 et 7, la zone de croisement C est formée par au moins un croisement et elle forme une zone de résistance. De préférence, la zone de croisement C comporte au moins deux ou trois croisements successifs pour augmenter la tenue mécanique.

Avantageusement, pour former une zone de résistance, il est avantageux de réaliser au moins deux croisements successifs espacés par une zone de séparation ou par une zone de liage.

La deuxième zone de résistance peut être réalisée par une zone de croisement comportant un ou plusieurs croisements ou par couture comme dans l'art antérieur.

Si les deux zones de résistance sont formées par deux zones de croisement, ces deux zones peuvent être réalisées avec le même nombre de croisements ou avec des nombres de croisement différents.

En comparaison d'une zone de résistance réalisée par couture, la zone de résistance réalisée par croisement est plus répétable car elle est réalisée par le métier à tisser.

De manière générale, les deux zones de résistance Z sont séparées par au moins deux zones de liage Y. En variante, il est également possible de séparer les deux zones de résistance Z par une seule zone de liage. Les connecteurs ont alors tendance à de déplacer le long de la sangle au fur et à mesure de la rupture du fil de liage. Dans la configuration illustrée à la figure 6, les deux des zones de liage Y sont séparées par une zone de séparation X. Cette zone de séparation X est utilisée pour connecter l'utilisateur et le point d'assurage. Dans cette configuration, les efforts sont appliqués à travers la zone de séparation X en cas de chute de l'utilisateur.

L'espace entre la zone d'application de l'effort de traction et la zone de liage Y est dépourvu d'autre contact mécanique permanent entre les deux sangles, c'est-à-dire qu'il n'y a pas d'autre zone de résistance Z, ni de zone de croisement C.

En effet, en cas de chute, cette zone de contact permanent viendrait empêcher la sollicitation de la zone de liage Y qui ne peut pas dissiper l'énergie de la chute.

De cette façon, en utilisant des zones de résistance par croisement, les deux sangles 2 et 3 sont intrinsèquement liées dans les zones de résistance Z sans qu'une couture soit nécessaire, ce qui permet d'augmenter notablement sa résistance tout en garantissant sa souplesse.

Dans un mode de réalisation particulier, les entrecroisements peuvent éventuellement former plusieurs boucles. Cela renforce d'autant plus la solidité de la sangle à déchirement 1. Comme cela est représenté à la figure 3, la longueur de chaque sangle 2 et 3 entre deux entrecroisements consécutifs peut être égale.

La figure 7 illustre, en vue de profil, la succession de différentes zones sur une sangle. On retrouve successivement une zone de séparation où les deux sangles sont séparées mécaniquement, une zone de liage Y, la zone de croisement C une nouvelle zone de liage puis une zone de résistance formée par un ou plusieurs croisement.

Ces modes de réalisation sont particulièrement avantageux car la sangle à déchirement est formée partiellement ou complètement par le métier à tisser qui définit consécutivement les zones de résistance en croisant les sangles, les zones de liage en connectant les sangles avec le fil de liage et les zones de séparation. La connexion mécanique finale est assurée par la zone de croisement formée par le métier à tisser.

Une sangle dite primaire est formée par la superposition des deux sangles 2 et 3 au moyen d'un métier à tisser. Ce métier à tisser va définir motif de répétition qui sera réalisé de manière répétitive tout au long de la sangle primaire. Le motif de répétition comporte :
- au moins une première zone de résistance formée par un croisement entre les première et deuxième sangles et où les première et seconde sangles 2 et 3 sont mécaniquement liées de manière permanente,
- une zone de liage Y où la première sangle 2 et la seconde sangle 3 sont mécaniquement liées par un fil de liage 4 tissé dans les première et deuxième sangles 2 et 3 et configuré pour dissiper l'énergie par rupture en cas d'utilisation dynamique de la sangle à déchirement 1,
- une zone de séparation où la première sangle 2 est séparée mécaniquement de la deuxième sangle 3.

De cette manière, plusieurs sangles à déchirement peuvent être tissées consécutivement dans la sangle primaire.

La sangle primaire peut être coupée pour former la sangle à déchirement prêt à l'emploi ou pour former une sangle à déchirement avant formation d'au moins une des zones de résistance par couture. Les zones de liage Y, de croisement C et de séparation X sont déjà définies et placées dans la sangle.

Pour former une sangle à déchirement telle qu'illustrée à la figure 3, il est avantageux de former un motif de répétition qui présente successivement une zone de séparation X, une première zone de liage Y, une zone de croisement C et une zone de liage additionnelle Y. Il est alors avantageux de couper la sangle primaire à l'intérieur des zones de séparation X. Si la sangle est constituée du motif de répétition précité, la coupure dans les zones de séparation X permet de former une sangle semblable à ce qui est illustré à la figure 3a.

Il est également possible de compléter le motif de répétition par des zones de liage Y, de séparation X, de croisement additionnelles C.

Il est également avantageux de former intégralement la sangle à déchirement 1 par le métier à tisser de manière à éviter des étapes postérieures de couture.

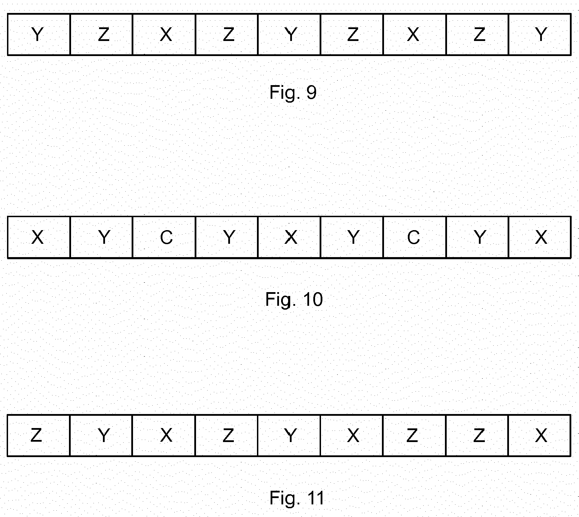

Pour former une telle sangle à déchirement telle qu'illustrée schématiquement à la figure 11, le motif de répétition peut être de manière consécutive :
- une première zone de résistance Z formée par une ou plusieurs zones de croisement de sangles,
- une première zone de liage Y,
- une zone de séparation X.

Ce mode de réalisation illustré à la figure 8 permet de former une sangle à déchirement telle qu'illustré à la figure 6 mais avec une seule zone de liage Y. Les connecteurs reliés respectivement à la sangle 2 et à la sangle 3 se déplacent le long des sangles au fur et à mesure de la chute. Si l'absorbeur est uniquement formé par ces trois zones, il est avantageux de fixer les connecteurs à chacune des sangles dans la zone de séparation X pour former un absorbeur compact.

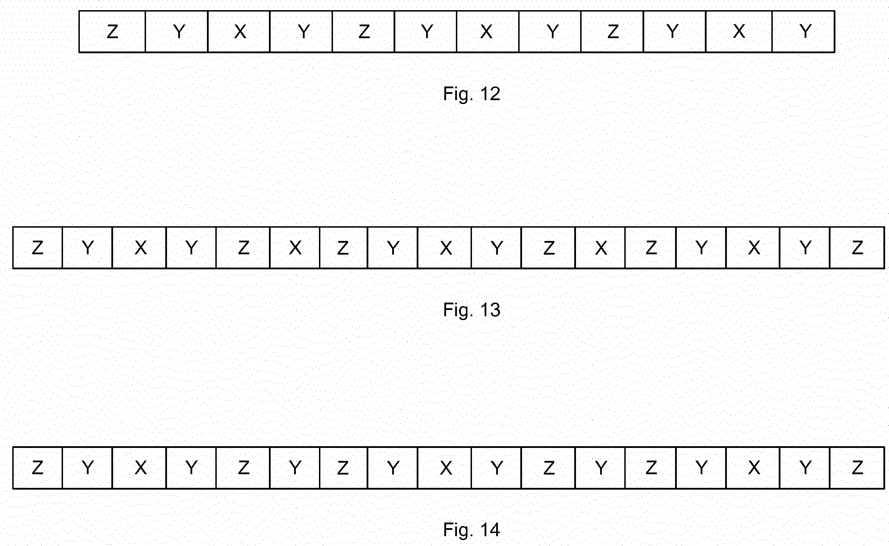

En variante, pour former la sangle à déchirement 1 illustrée à la figure 6, le motif de répétition peut comporter une zone de liage additionnelle Y qui est séparée de la première zone de liage Y par la zone de séparation X. Ce mode de réalisation est illustré à la figure 12. La longueur de la première zone de liage peut être différente de la longueur de la zone de liage additionnelle, mais il est avantageux d'avoir deux longueurs identiques pour faciliter le travail de la sangle à déchirement. Une deuxième zone de résistance est également formée.

Si la zone de résistance est formée par plusieurs croisements, il est possible de couper la sangle primaire à l'intérieur de la zone de résistance de manière à former les zones de résistance Z des deux extrémités de la sangle à déchirement 1. En d'autres termes, la coupure est avantageusement réalisée de manière à laisser de chaque côté de la zone de coupe au moins un croisement et de préférence plusieurs croisements. Ces différentes zones de croisement C vont former les zones de résistance Z de deux sangles à déchirure successives. De manière avantageuse, la sangle est coupée à chaud de manière à éviter un effilochage de la sangle. Après la coupure, une soudure de la sangle est réalisée préférentiellement sur l'extrémité coupée pour renforcer la résistance.

Si la zone de résistance Z est formée par un seul croisement, une deuxième zone de résistance doit être formée dans le motif de répétition. Les deux zones de résistance Z sont séparées par au moins une autre zone qui peut être quelconque.

A titre d'exemple, ce motif additionnel peut être une deuxième zone de séparation et/ou une zone de liage additionnelle Y. Cependant, ce mode de réalisation peut être moins compact.

En variante, le métier à tisser va définir successivement et de manière répétitive :
- une première zone de résistance Z formée par plusieurs zones de croisement C,
- une première zone de liage Y,
- une zone de séparation X,
- une zone de liage additionnelle Y,
- une deuxième zone de résistance Z formée par plusieurs zones de croisement C,
- une deuxième zone de séparation X et/ou une zone de liage additionnelle Y.
Ces modes de réalisation sont illustrés sur les figures 13 et 14.

Pour former la sangle à déchirement 1, la sangle primaire est coupée dans deux deuxième zones de séparation et/ou troisième zone de liage consécutives. Les zones de croisement C formées de chaque côté de la zone de coupure vont définir les zones de résistance Z des sangles à déchirement.

Ce mode de réalisation est particulièrement intéressant car les sangles à déchirement 1 peuvent être réalisées par une machine à tisser avec une intervention humaine réduite. Les sangles à déchirement sont finalisées par coupure de la sangle primaire, c'est-à-dire avec une autre intervention humaine réduite.

En changeant l'enchevêtrement des fils entre les différentes zones, il est possible de définir les différentes propriétés mécaniques recherchées. Le fil de liage 4 est présent dans les zones de séparation X et dans les zones de croisement C, mais son positionnement n'intervient pas mécaniquement. La sangle à déchirement 1 peut être intégralement définie par la machine à tisser.

Comme indiqué plus haut, pour former les zones de liage Y, les sangles 2 et 3 sont connectées au moyen d'au moins un fil de liage 4. Un exemple de réalisation est illustré pour une sangle plate et pour une sangle tubulaire (figures 4 et 5). La figure 4 illustre un mode de réalisation représentant le croisement de deux sangles plates. Cependant, il est également possible de réaliser le croisement de deux sangles tubulaires comme cela est illustré à la figure 5. Le fil de liage 4 vient connecter des fils de trame de la sangle 2 avec des fils de trame de la sangle 3. Dans la zone de séparation X, les fils de liage sont disposés uniquement dans la sangle 2 et/ou dans la sangle 3 sans faire de connexion entre les deux sangles 2 et 3. Bien que le fil de liage 4 soit présent, il n'intervient pas pour maintenir les deux sangles en contact.

Etant donné que le dispositif d'attache de sécurité peut être utilisé dans le cadre d'une utilisation dynamique, il est avantageux de prévoir que les deux sangles 2 et 3 présentent des caractéristiques mécaniques identiques, et de préférence le même module d'Young. Un moyen d'y parvenir est de réaliser des sangles dotées de fils de chaîne identiques d'une part, et de fils de trame identiques d'autre part.

Dans un mode de réalisation particulier, les premiers et deuxièmes fils de chaîne 6 et 7 sont identiques, tant dans leur matériau que dans le nombre de fils utilisés. Cependant, il est également possible de prévoir que les premiers et deuxièmes fils de chaîne 6 et 7 soient différents dans leurs performances mécaniques. Dans ce cas, le nombre de premiers fils de chaîne 6 peut être différent du nombre de deuxièmes fils de chaîne 7, de sorte à obtenir des propriétés mécaniques similaires.

Pour avoir un comportement mécanique identique sur toute la longueur des sangles 2 et 3, il est également avantageux d'avoir un premier matériau de trame identique au deuxième matériau de trame.

Les premiers et deuxièmes fils de chaîne 6 et 7 ainsi que les premiers et deuxièmes fils de trame 8 et 9 peuvent avantageusement être réalisés avec un même type de fil, c'est-à-dire des fils réalisés dans le même matériau et ayant le même diamètre.

Avoir deux sangles 2 et 3 tissées à partir de fils de chaîne et de trame identiques permet avantageusement d'assurer une bonne répartition des efforts en cas d'utilisation dynamique de la sangle à déchirement 1.

Selon un premier mode de réalisation, les fils de chaîne 6 et 7 et les fils de trame 8 et 9 peuvent être réalisés dans des matériaux présentant un faible module d'Young, de sorte à dissiper une partie de l'énergie emmagasinée par l'absorbeur d'énergie lors d'une utilisation dynamique. Les matériaux peuvent être choisis parmi le polyester, le polyamide ou le polypropylène.

Il est également possible d'utiliser des fils de chaîne 6 et 7 et des fils de trame 8 et 9 très rigides de sorte à éviter les oscillations de l'utilisateur au cours de sa chute. Par rigide, on entend que les fils peuvent avoir un module d'Young supérieur à 40 GPa.

Les sangles 2 et 3 peuvent également comprendre des fils de chaîne 6 et 7 très rigides et des fils de trame 8 et 9 qui le sont moins. Les fils de chaîne peuvent par exemple être réalisés avec des fils ayant un module d'Young supérieur à 40 GPa, tandis que les fils de trame peuvent être moins rigides et sont par exemple en polyester, en polyamide ou en polypropylène.

La sangle à déchirement 1 peut avantageusement être intégrée à un dispositif d'attache de sécurité (non représenté) pour le déplacement d'un utilisateur le long d'une main courante, par exemple dans une longe de via-ferrata.

L'invention concerne également le procédé permettant de fabriquer des sangles à déchirement 1 comportant des sangles 2 et 3 qui s'entrecroisent.

Pour cela, les première et deuxième sangles 2 et 3 sont tout d'abord tissées simultanément dans la première zone A par deux trameurs placés l'un au dessus de l'autre. La première sangle 2 est tissée à partir des premiers fils de chaîne 6 et des premiers fils de trame 8 au moyen d'un premier trameur (non représenté), et la deuxième sangle 3 est tissée avec des deuxièmes fils de chaîne 7 et des deuxièmes fils de trame 9 à l'aide d'un deuxième trameur (non représenté).

Les premiers et deuxièmes fils de chaîne 6 et 7 sont ensuite entrecroisés (réalisation de la zone C), de sorte que les premiers fils de chaîne 4 soient associés aux deuxième fils de trame 9 dans le deuxième trameur pour former la première sangle 2, et les deuxièmes fils de chaîne 7 coopèrent avec les premiers fils de trame 8 dans le premier trameur pour former la deuxième sangle 3. La deuxième zone B des sangles 2 et 3 est ensuite tissée.

Dans un mode de mise en oeuvre particulier, le tissage est arrêté pour permettre l'entrecroisement des premiers et deuxièmes fils de chaîne 6 et 7. L'arrêt du tissage correspond à la réalisation de la troisième zone C de la sangle à déchirement 1. Lorsque les fils de chaîne sont correctement entrecroisés, le tissage peut alors redémarrer pour former les première et deuxième sangles 2 et 3 dans la deuxième zone B.

Cette méthode de fabrication présente l'avantage de garantir la tenue de la sangle à déchirement 1 malgré le croisement des premiers et deuxièmes fils de chaîne 6 et 7. Toutefois, l'arrêt du tissage augmente la durée de fabrication de la sangle à déchirement 1.

Pour remédier à ce problème, une autre technique peut être de ralentir la vitesse de tissage et d'augmenter l'écartement entre les fils de chaîne consécutifs.

Comme pour le premier mode de mise en oeuvre du procédé de fabrication de la sangle à déchirement 1, dans la première zone A, la première sangle 2 est tissée à l'aide des premiers fils de chaîne 6 et des premiers fils de trame 8. La deuxième sangle 3 est tissée à l'aide des deuxièmes fils de chaîne 7 et des deuxièmes fils de trame 9. Le tissage de chaque sangle est réalisé à la vitesse V1. La distance séparant deux premiers fils de chaîne 6 ou deux deuxièmes fils de chaîne 7 est notée D1.

Ensuite la vitesse de tissage est diminuée à une vitesse V2 inférieure à la vitesse V1, et l'écartement entre les premiers fils de chaîne 6 et les deuxièmes fils de chaîne 7 est augmenté à la distance D2 supérieure à D1. La diminution de la vitesse de tissage peut être réalisée avant ou après l'augmentation de la distance entre les fils de chaîne. Ces deux étapes peuvent également être effectuées de manière simultanée.

La diminution de la vitesse de tissage et l'augmentation de la distance entre les fils de chaîne permet d'entrecroiser les fils de chaîne en les positionnant de manière correcte. Cela signifie par exemple que chaque premier fil de chaîne 6 prend la place d'un deuxième fil de chaîne 7 lorsque les premiers et deuxièmes fils de chaîne 6 et 7 sont réalisés avec le même type de fils. Ces étapes de diminution de la vitesse de tissage et d'augmentation de la distance entre les fils permettent la réalisation de la zone de croisement C de la sangle à déchirement 1.

Après l'étape d'entrecroisement des premiers et deuxièmes fils de chaîne 6 et 7, les premiers fils de chaîne 6 coopèrent avec les deuxièmes fils de trame 9, et les deuxièmes fils de chaîne 7 coopèrent avec les premiers fils de trame 8, de sorte à former la deuxième zone B de la sangle à déchirement 1.

La distance entre deux fils de chaîne consécutifs est alors diminuée à une valeur inférieure à D2, de préférence jusqu'à la valeur D1 choisie pour tisser les sangles 2 et 3 dans la première zone A. La vitesse de tissage est ensuite augmentée à une valeur supérieure à V2, de préférence à jusqu'à la valeur D1. L'augmentation de la vitesse de tissage et la diminution de la distance entre les fils de chaîne peut être réalisée simultanément, ou consécutivement dans un ordre quelconque.

Il est préférable que la vitesse de tissage et que la distance entre les fils de chaîne soient identiques dans les première et deuxième zones A et B pour garantir l'homogénéité du tissage de la sangle à déchirement 1, et donc ses propriétés mécaniques.

Le fait d'augmenter l'écartement entre les fils de chaîne dans la troisième zone C permet de faciliter l'entrecroisement des fils de chaîne.

Le croisement en milieu de zone de liage dans une configuration proche de celle de la figure 3a peut aussi être facilitée par une légère avancée de la chaine sans tramage.

Le fait de tisser les deux sangles simultanément permet également d'éviter les risques de coudre deux sangles ayant des propriétés mécaniques différentes, voir incompatibles. Cela garantit un meilleur suivi de la qualité de la sangle à déchirement 1 lors de sa fabrication.

On notera également que l'utilisation simultanée de deux trameurs permet de tisser un ou plusieurs fils de liage (non représentés) directement lors de la fabrication des première et deuxième sangles 2 et 3 pour les connecter mécaniquement. Toutefois l'invention ne se limite pas à ce mode de réalisation. Il est tout à fait possible de coudre le fil de liage après le tissage des sangles.

## Revendications

1. Sangle à déchirement (1) munie de première et deuxième sangles tissées (2, 3), chacune des première et seconde sangles tissées (2, 3) comportant :
- au moins une zone de séparation (X) où la première sangle (2) est séparée mécaniquement de la deuxième sangle (3),
- au moins une zone de liage (Y) où la première sangle (2) et la seconde sangle (3) sont mécaniquement liées par un fil de liage (4) tissé dans les première et deuxième sangles (2, 3) et configurée pour dissiper l'énergie par rupture en cas d'utilisation dynamique de la sangle à déchirement (1),
- au moins une zone de résistance (Z) où les première et seconde sangles (2, 3) sont mécaniquement liées de manière permanente,
**caractérisée en ce que** la au moins une zone de résistance (Z) comporte au moins un croisement où la première sangle (2) traverse la deuxième sangle (3).

2. Sangle à déchirement (1) selon la revendication 1, comportant une zone de résistance (Z), la zone de résistance (Z) étant séparée de la au moins une zone de séparation (X) par la au moins une zone de liage (Y).

3. Sangle à déchirement (1) selon la revendication 1, comportant deux zones de résistance disposées à chacune des extrémités, les deux zones de résistances étant séparées par la au moins une zone de séparation (X) et par la au moins une zone de liage (Y).

4. Sangle à déchirement (1) selon la revendication 3, comportant une zone de liage (Y) et une zone de liage additionnelle (Y) séparées par la zone de séparation (X).

5. Sangle à déchirement (1) selon l'une quelconque des revendications 1 à 4, dans laquelle la au moins une zone de résistance (Z) comporte au moins deux croisements où la première sangle (2) traverse la deuxième sangle (3).

6. Sangle à déchirement (1) selon l'une quelconque des revendications 3 à 5, comportant une zone de croisement (C) où la première sangle (2) traverse la deuxième sangle (3), la zone de croisement (C) séparant les deux zones de résistance (Z) et dans laquelle chaque zone de résistance (Z) est séparée de la zone de croisement (C) par au moins une zone de liage (Y) le long de chacune des première et deuxième sangles (2, 3), des première et secondes zones de liage (Y) étant séparées par la au moins une zone de croisement (C).

7. Sangle à déchirement (1) selon l'une quelconque des revendications 1 à 6, dans laquelle chaque zone de résistance (Z) comporte au moins un croisement où la première sangle (2) traverse la deuxième sangle (3).

8. Sangle formée par tissage de première et deuxième sangles (2, 3) superposées et comportant :
- au moins un croisement et préférentiellement au moins deux croisements où la première sangle (2) traverse la deuxième sangle (3),
- au moins une zone de liage (Y) où la première sangle (2) et la seconde sangle (3) sont mécaniquement liées par un fil de liage (4) tissé dans les première et deuxième sangles (2, 3),
- au moins zone de séparation (X), où la première sangle (2) est séparée mécaniquement de la deuxième sangle (3).

9. Sangle selon la revendication 8, comportant un motif de répétition formé de manière répétitive, le motif de répétition comportant successivement :
- une première zone de résistance (Z) comportant au moins un croisement et préférentiellement au moins deux croisements où la première sangle (2) traverse la deuxième sangle (3),
- une première zone de liage (Y) où la première sangle (2) et la seconde sangle (3) sont mécaniquement liées par un fil de liage (4) tissé dans les première et deuxième sangles (2, 3),
- une zone de séparation (X), où la première sangle (2) est séparée mécaniquement de la deuxième sangle (3).

10. Sangle selon la revendication 9, dans laquelle le motif de répétition comporte après la zone de séparation (X) :
- une zone de liage additionnelle (Y) où la première sangle (2) et la seconde sangle (3) sont mécaniquement liées par un fil de liage (4) tissé dans les première et deuxième sangles (2, 3).

11. Sangle selon la revendication 10, comportant successivement après la zone de liage additionnelle (Y):
- une deuxième zone de résistance (Z) comportant au moins un croisement et préférentiellement au moins deux croisements où la première sangle (2) traverse la deuxième sangle (3),
- une deuxième zone de séparation (X) et/ou une deuxième zone de liage additionnelle (Y).

12. Procédé de fabrication d'une sangle à déchirement (1) selon la revendication 2, comprenant les étapes suivantes :
• fournir une sangle selon l'une des revendications 9 à 11,
• couper la sangle au moins dans la zone de séparation (X).

13. Procédé de fabrication d'une sangle à déchirement (1) selon la revendication 12, dans laquelle la sangle est une sangle selon la revendication 10 et dans laquelle le procédé comporte une étape de coupe de la sangle entre deux croisements de la zone de résistance (Z).

14. Procédé de fabrication d'une sangle à déchirement (1) selon la revendication 12, dans laquelle la sangle est une sangle selon la revendication 11 et dans laquelle le procédé comporte une étape de coupe de la sangle dans une deuxième zone de séparation (X) et/ou dans la deuxième zone de liage additionnelle (Y).

15. Procédé de fabrication d'une sangle à déchirement (1) selon l'une quelconque des revendications 3 à 7, comportant les étapes suivantes :
• fournir une sangle selon l'une des revendications 10 et 11,
• couper la sangle entre deux croisements de la zone de résistance (Z) lorsque la sangle est une sangle selon la revendication 10 ou
• couper la sangle dans deuxième zone de séparation (X) et/ou dans la deuxième zone de liage additionnelle (Y), lorsque la sangle est une sangle selon la revendication 11.
